# FASCICULE DE BREVET EUROPEEN

(11) **EP 2 426 051 B1**
(45) Date de publication et mention de la délivrance du brevet: **19.03.2014**
(21) Numéro de dépôt: 11179138.0
(22) Date de dépôt: 29.08.2011
(51) Int. Cl.: B64D 27/26

(54) **Mât d'accrochage de turboréacteur pour aéronef comprenant des attaches voilure avant alignees**
Strahlturbinenpylon mit fluchtenden vorderen Befestigungspunkten
Jet engine pylon comprising aligned front attachment points

(30) Priorité: 03.09.2010 FR 1057026
(43) Date de publication de la demande: 07.03.2012
(73) Titulaire: Airbus Operations, 31060 Toulouse (FR)
(72) Inventeur: Teulou, Olivier, 31200 Toulouse (FR); Diochon, Lionel, 31200 Toulouse (FR); Petrissans Lloveras, Isabelle, 31270 Cugnaux (FR)
(74) Mandataire: Ilgart, Jean-Christophe

(56) Documents cités:
- FR-A1- 2 878 229
- FR-A1- 2 909 973

## Description

### DOMAINE TECHNIQUE

La présente invention se rapporte à un mât d'accrochage de turboréacteur pour aéronef. Ce type de mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure.

### ÉTAT DE LA TECHNIQUE ANTÉRIEURE

Un tel mât d'accrochage est en effet prévu pour constituer l'interface de liaison entre un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, également dénommée structure primaire, souvent du type caisson, c'est-à-dire formée par l'assemblage de longerons supérieurs et inférieurs raccordés entre eux par l'intermédiaire de nervures transversales, des panneaux latéraux pouvant également être prévus.

D'autre part, le mât est muni d'un système de montage interposé entre le turboréacteur et la structure rigide du mât, ce système comportant globalement au moins deux attaches moteur, généralement au moins une attache avant et au moins une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à une attache arrière fixée sur le carter central de ce dernier.

De la même façon, le mât d'accrochage comporte également un second système de montage interposé entre la structure rigide de ce mât et la voilure de l'aéronef, ce second système, également dénommé moyens d'accrochage du mât sur la voilure, étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, un mât d'accrochage classique de turboréacteur de l'art antérieur prend grossièrement la forme d'un caisson parallélépipédique, disposant de grandes dimensions afin de pouvoir reprendre la totalité des efforts générés par le turboréacteur associé, et de les transférer dans la voilure. A cet égard, il est noté que les moyens d'accrochage du mât sur la voilure comprennent une attache arrière voilure généralement conçue de manière à reprendre au moins les efforts s'exerçant selon la direction transversale du mât, de manière à pouvoir participer à la reprise du moment s'exerçant selon la direction verticale, conjointement avec une autre attache voilure située plus en avant sur le caisson, reprenant elle aussi les efforts s'exerçant selon la direction transversale. Ce mode de reprise du moment s'exerçant selon la direction verticale nécessite alors en particulier de prévoir une largeur transversale du caisson importante en partie arrière de celui-ci, et plus généralement sur toute la longueur du mât.

Par conséquent, le fort encombrement du mât, résultant notamment de l'importante largeur transversale de sa partie arrière, provoque inéluctablement des perturbations importantes du flux secondaire s'échappant du canal annulaire de soufflante, ce qui se traduit directement par une traînée importante, ainsi que par des pertes en termes de rendement du turboréacteur et de consommation de carburant.

Pour faire face à ce problème, le document FR 2 909 973 prévoit un mât disposant d'une part d'une structure rigide comportant un caisson central longitudinal avant, et d'autre part des moyens d'accrochage du mât sur une voilure de l'aéronef, ces moyens d'accrochage du mât sur la voilure comprenant deux attaches latérales voilure chacune conçue de manière à reprendre des efforts de poussée s'exerçant selon une direction longitudinale du mât, et présentant une ferrure de raccordement sur le mât fixée au caisson central longitudinal avant, les moyens d'accrochage du mât sur la voilure comprenant en outre une attache arrière voilure située en arrière par rapport aux attaches latérales. De plus, la structure rigide comprend en outre une structure arrière de largeur transversale réduite par rapport à celle du caisson central longitudinal avant, prolongeant ce dernier vers l'arrière et portant l'attache arrière voilure conçue de manière à reprendre uniquement des efforts s'exerçant selon une direction verticale du mât.

Ainsi, dans cette solution apportée par le document FR 2 909 973, la reprise du moment s'exerçant selon la direction verticale s'effectue à l'aide des deux attaches latérales voilure reprenant chacune les efforts de poussée selon la direction longitudinale, et non plus avec l'attache arrière voilure. A ce titre, il est noté que les attaches latérales principalement dédiées à la reprise des efforts de poussée générés par le turboréacteur sont naturellement conçues pour supporter le passage d'efforts extrêmement importants, de sorte que la fonction additionnelle de reprise du moment s'exerçant selon la direction verticale du mât, à l'aide de la reprise des efforts longitudinaux de poussée, n'engendre pas de surdimensionnement de ces attaches latérales voilure, ni celui du caisson central longitudinal au niveau de ces dernières.

Par ailleurs, le mode particulier de reprise du moment s'exerçant selon la direction verticale ne nécessite plus de prévoir une largeur surdimensionnée de la partie de la structure rigide située en arrière des attaches latérales voilure, étant donné que cette partie arrière de la structure rigide n'est plus dédiée à la reprise de ce moment selon la direction verticale.

Dans cette solution, il est prévu que les moyens d'accrochage du mât sur la voilure de l'aéronef soient constitués par les deux attaches latérales voilure, par l'attache arrière voilure située en arrière par rapport aux attaches latérales, et par une attache avant voilure située en avant par rapport à ces dernières. Cette attache avant est dédiée la reprise des efforts s'exerçant selon la direction transversale Y du mât.

Bien que répondant au problème mentionné ci-dessus, cette solution s'avère perfectible, notamment en ce qui concerne le comportement mécanique des ferrures verticales intégrées aux attaches latérales. Ces ferrures, qui coopèrent avec des chapes, ont effectivement tendance à fléchir selon la direction transversale Y. La flexion engendrée est non seulement néfaste en termes de fatigue mécanique, mais constitue également une cause de migration des bagues portées par ces ferrures, bagues qui sont chacune destinée à recevoir un organe d'articulation entre la ferrure et sa chape associée dans l'attache latérale.

### EXPOSÉ DE L'INVENTION

L'invention a donc pour but de proposer un mât d'accrochage de turboréacteur pour aéronef remédiant au moins partiellement aux inconvénients mentionnés ci-dessus, relatifs aux réalisations de l'art antérieur.

Pour ce faire, l'invention a pour objet un mât d'accrochage de turboréacteur pour aéronef, ledit mât disposant d'une structure rigide et de moyens d'accrochage du mât sur une voilure de l'aéronef, lesdits moyens d'accrochage du mât sur la voilure comprenant deux attaches avant latérales chacune conçue de manière à reprendre des efforts de poussée s'exerçant selon une direction longitudinale (X) du mât, chaque attache avant latérale comprenant une ferrure percée d'un premier orifice et destinée à être solidaire de l'un des éléments pris parmi la structure rigide et la voilure, ainsi qu'une chape destinée à être solidaire de l'autre des ces éléments, et un organe d'articulation reliant ladite ferrure et la chape en traversant ledit premier orifice, lesdits moyens d'accrochage comportant en outre une attache avant centrale conçue de manière à reprendre des efforts s'exerçant selon une direction transversale (Y) du mât.

Selon l'invention, ladite attache avant centrale comprend une rotule, et se trouve agencée entre les deux attaches avant latérales de sorte que le centre de la rotule se situe, en vue selon la direction transversale (Y), dans chacun des deux premiers orifices des attaches avant latérales.

Cette spécificité, traduisant un alignement des trois attaches voilure avant, permet de réduire considérablement la flexion des ferrures des attaches latérales, qui sont donc moins sollicitées en fatigue. De plus, le phénomène de migration des bagues, préférentiellement portées par ces ferrures, est fortement diminué, voire inexistant.

Ces avantages sont encore plus notables lorsque le centre de la rotule est aligné avec le centre des deux premiers orifices des attaches avant latérales.

De préférence, ladite structure rigide comporte un caisson comprenant un longeron supérieur, un longeron inférieur ainsi que deux panneaux latéraux. En vue selon la direction transversale (Y), les centres des deux premiers orifices des attaches avant latérales se situent dans ledit longeron supérieur ou longeron inférieur, suivant que le turboréacteur est destiné à être placé au-dessus ou en dessous de la voilure. Cela permet de ne pas introduire de moment parasite conséquent dans le caisson. Cet avantage est accentué lorsque le centre de la rotule de l'attache avant centrale se situe elle aussi dans ledit longeron supérieur ou longeron inférieur.

De préférence, lesdits moyens d'accrochage comprennent également une attache arrière comportant une rotule, ce qui diminue globalement la masse et l'encombrement d'une telle attache, notamment en comparaison d'une solution constituée de l'assemblage de manilles et de ferrures.

Préférentiellement, lesdits moyens d'accrochage du mât sur la voilure de l'aéronef sont constitués par ladite attache arrière conçue de manière à reprendre uniquement des efforts s'exerçant selon la direction verticale (Z) du mât, lesdites deux attaches avant latérales chacune conçue de manière à reprendre uniquement des efforts s'exerçant selon la direction longitudinale (X) du mât et selon la direction verticale (Z) de celui-ci, et ladite attache avant centrale conçue de manière à reprendre uniquement des efforts s'exerçant selon la direction transversale (Y) du mât.

Cela permet avantageusement de former un système de reprise d'efforts isostatique entre la structure rigide du mât et la voilure de l'aéronef.

L'invention a également pour objet un ensemble moteur pour aéronef comprenant un mât d'accrochage tel que celui qui vient d'être présenté, et un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un mât d'accrochage selon un mode de réalisation préféré de la présente invention ;
- la figure 2 représente une vue plus détaillée en perspective du mât d'accrochage représenté sur la figure 1 ;
- la figure 3 représente une vue de dessus du mât d'accrochage montré sur la figure 2 ;
- la figure 4 représente une vue de côté du mât d'accrochage montré sur les figures 2 et 3, suspendu sous une voilure de l'aéronef par l'intermédiaire de moyens d'accrochage ;
- la figure 5 représente une vue en perspective du mât d'accrochage et des moyens d'accrochage montrés sur la figure 4 ; et
- la figure 6 représente une vue partielle agrandie de côté d'une partie des moyens d'accrochage de la structure rigide du mât sous la voilure.

### EXPOSÉ DÉTAILLÉ DE MODES DE RÉALISATION PARTICULIERS

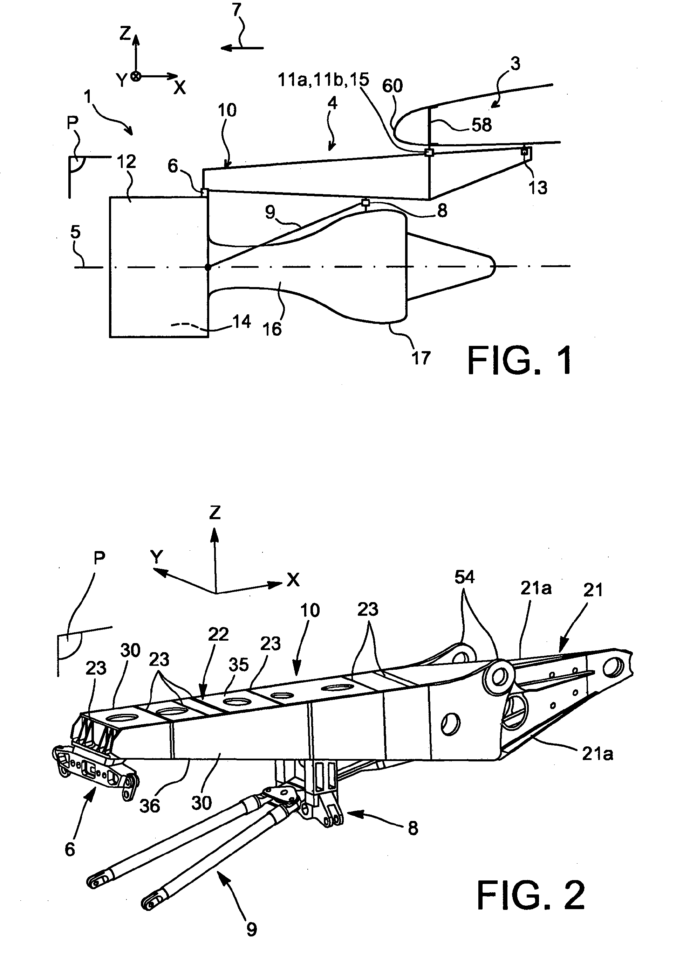

En référence à la figure 1, on voit un ensemble moteur 1 pour aéronef destiné à être fixé sous une aile / voilure 3 de cet aéronef, cet ensemble 1 comportant un mât d'accrochage 4 selon un mode de réalisation préféré de la présente invention.

Globalement, l'ensemble moteur 1 est composé d'un turboréacteur 2 et du mât d'accrochage 4, ce dernier étant muni notamment d'une pluralité d'attaches moteur 6, 8, 9, d'une pluralité d'attaches voilure 11a, 11b, 13, 15, et d'une structure rigide 10 portant ces attaches. A titre indicatif, il est noté que l'ensemble 1 suspendu sous la voilure de l'aéronef à l'aide de la pluralité d'attaches voilure est par ailleurs destiné à être entouré d'une nacelle (non représentée) .

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1 schématique, on peut voir que seules les attaches moteur 6, 8, 9, les attaches voilure 11a, 11b, 13, 15, et la structure rigide 10 du mât d'accrochage 4 ont été représentées. Les autres éléments constitutifs non représentés de ce mât 4, telle que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres. Comme cela ressort de ce qui précède, il s'agit ici préférentiellement d'un turboréacteur disposant d'un fort taux de dilution.

Comme on peut l'apercevoir sur la figure 1, une attache moteur avant 6 est fixée sur le carter de soufflante 12, à la périphérie et à l'arrière de celui-ci, l'attache 6 étant traversée par un plan vertical P défini par l'axe 5 et la direction Z.

Comme cela a été schématisé sur la figure 2, cette attache avant 6 peut être réalisée classiquement, par l'assemblage de biellettes/manilles et de ferrures.

En outre, il est prévu une attache moteur arrière 8 représentée schématiquement sur la figure 1 et plus en détail sur la figure 2, cette attache 9 étant également réalisée classiquement par l'assemblage de biellettes/manilles et de ferrures, et interposée entre la structure rigide 10 et le carter d'éjection 17.

Enfin, un dispositif de reprise des efforts de poussée 9, du type classique à deux bielles latérales symétriques par rapport au plan P, vient compléter les moyens d'accrochage du turboréacteur sur le mât. Les deux bielles peuvent être articulées à leur extrémité avant sur un palonnier monté sur une ferrure de l'attache moteur arrière 8.

Toutes ces attaches forment ensemble un système de reprise d'efforts isostatique.

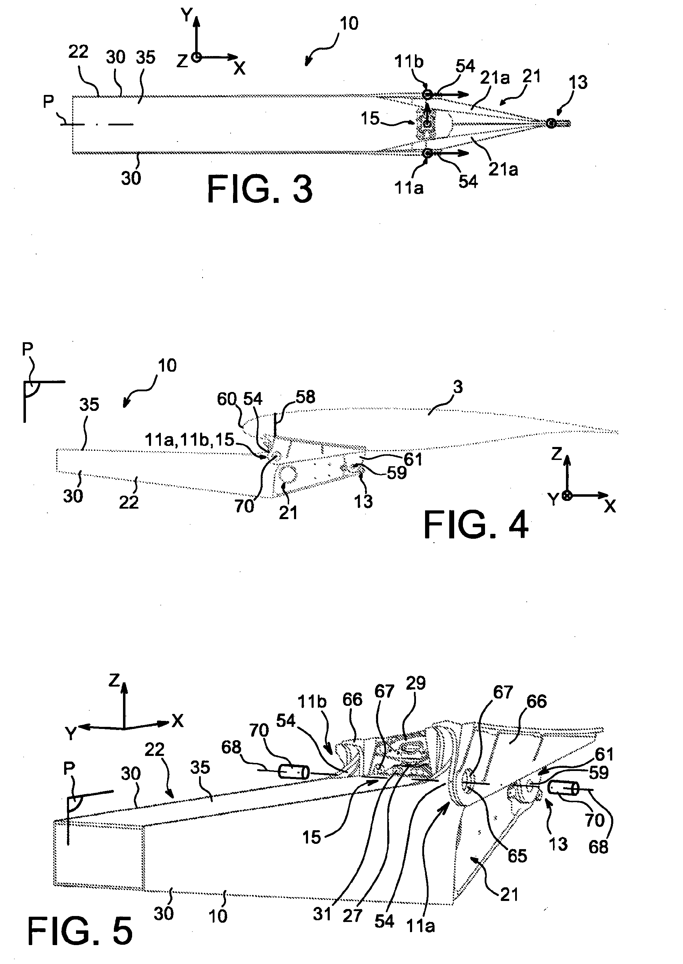

En référence aux figures 2 et 3, on voit que la structure rigide 10 est conçue de manière à présenter une symétrie par rapport au plan vertical P indiqué ci-dessus, c'est-à-dire par rapport au plan vertical parallèle à la direction X, défini par l'axe longitudinal 5 du turboréacteur 2, et la direction Z.

La partie avant de cette structure rigide 10 comporte un caisson longitudinal 22, également appelé caisson de torsion, qui s'étend sensiblement dans la direction X à partir de l'extrémité avant de la structure rigide 10, parallèlement à cette même direction. Comme le montre cette figure et tel que cela sera décrit ci-après, le caisson longitudinal 22 s'étend vers l'arrière jusqu'à ce qu'il soit prolongé par une structure arrière de largeur transversale réduite 21, appartenant également à la structure rigide/primaire 10 du mât 4.

A titre indicatif, le caisson 22 peut être formé par l'assemblage de deux longerons/panneaux latéraux 30 s'étendant selon la direction X dans des plans XZ parallèles, et raccordés entre eux par l'intermédiaire de nervures transversales 23 qui sont quant à elles orientées dans des plans YZ parallèles. En outre, un longeron supérieur 35 et un longeron inférieur 36 sont également prévus pour fermer le caisson 22, chacun de ces longerons pouvant être réalisé d'un seul tenant ou par l'assemblage de plusieurs éléments, et étant préférentiellement de forme plane.

La nervure transversale 23 la plus avant, qui ferme le caisson 22, porte l'attache moteur avant 6.

Comme mentionné ci-dessus, la structure rigide 10 comporte, raccordée à l'arrière du caisson 22, une structure arrière de largeur transversale réduite 21. Elle prend ici la forme d'une structure sensiblement pyramidale, présentant une section diminuant en allant vers l'arrière. Alternativement, cette structure arrière 21 pourrait être d'épaisseur constante, par exemple du type de celles décrites et représentées dans le document FR 2 909 973.

Pour réaliser la forme pyramidale, la structure arrière 21 est réalisée à partir de deux pièces symétriques par rapport au plan P, référencées 21a, 21a. Ces deux pièces, chacune en forme de demi-pyramide, ont une base reliée à l'arrière du caisson 22, une nervure transversale arrière étant préférentiellement agencée entre ces deux entités. Cette nervure transversale arrière peut être rapportée sur le caisson 22, ou faire partie intégrante des pièces 21a, 21a constituant la structure arrière 21 en forme de pyramide creuse 21.

Sur les figures 3 à 6, il est représenté de façon détaillée les attaches voilure 11a, 11b, 13, 15, formant ensemble un système de reprise d'efforts isostatique.

Sur ces figures, on peut effectivement voir que les moyens d'accrochage du mât 4 sur la voilure 3 de l'aéronef sont constitués par les deux attaches avant latérales 11a, 11b, par l'attache arrière 13 située en arrière par rapport aux attaches latérales, et par l'attache avant centrale 15 située au même niveau que les attaches latérales, selon la direction X. La conception de ces attaches voilure va maintenant être détaillée.

Pour ce qui concerne l'attache arrière 13, elle présente la particularité d'être montée sur la structure arrière de largeur réduite 21, et plus précisément sur une extrémité arrière de celle-ci. Elle comporte une rotule 59 dont la partie mâle est raccordée à la voilure par une chape 61, et dont la partie femelle est raccordée au caisson 22 en étant logée dans un orifice de l'extrémité arrière de la structure 21. Elle est conçue pour assurer uniquement la reprise des efforts s'exerçant selon la direction Z, et se raccorde sur la voilure 3 en arrière par rapport à un longeron avant 58 de cette voilure. Pour ce faire, la bague extérieure de la rotule 59 peut être prévue glissante par rapport à son logement dans la direction X, et la bague intérieure de la rotule 59 peut être prévue glissante par rapport à l'axe 70 dans la direction Y, tel que cela est connu de l'homme du métier.

L'attache avant centrale 15 est située sur une partie arrière du caisson 22, à proximité de la nervure transversale arrière précitée. Elle est rapportée fixement sur le longeron supérieur 35. Comme cela est le mieux visible sur la figure 5, l'attache 15 comprend une rotule 27, dont la partie mâle est raccordée à la voilure par une ferrure de raccordement 29, et dont la partie femelle est raccordée au caisson 22 par une ferrure de raccordement 31 boulonnée sur le longeron supérieur 35. De préférence, la ferrure de raccordement 29 se situe au droit ou à proximité, dans la direction Z, du longeron avant de voilure 58, lui-même agencé de façon connue légèrement en arrière par rapport à une extrémité avant de bord d'attaque 60. La ferrure de raccordement 29 est de préférence fixée par boulonnage sur ce longeron avant d'aile 58, suivant le bord d'attaque 60.

Cette attache 15, de préférence agencée pour être traversée par le plan vertical P, est prévue pour assurer uniquement la reprise des efforts s'exerçant selon la direction Y. Pour ce faire, la bague extérieure de la rotule 27 peut être prévue glissante par rapport à son logement dans la direction X, et la bague intérieure de la rotule 27 peut être prévue glissante par rapport à l'axe de la ferrure 29, dans la direction Z, tel que cela est connu de l'homme du métier.

Les deux attaches avant latérales 11a, 11b sont sensiblement identiques, et disposées symétriquement par rapport au plan vertical P. Elles présentent chacune une ferrure 54 faisant légèrement saillie vers l'arrière et vers le haut par rapport au caisson central 22. Chaque ferrure est préférentiellement réalisée d'un seul tenant avec son panneau latéral 30 associé, en étant située dans le même plan que ce dernier. Elle est percée d'un premier orifice 65 d'axe parallèle à la direction Y, destiné au raccordement d'une chape 66 dont les deux têtes sont situées de part et d'autre de la ferrure 54. Les deux têtes présentent respectivement deux seconds orifices 67, de même axe 68 que celui du premier orifice 65.

Un organe d'articulation 70, en forme d'axe, traverse et relie les trois orifices 67, 65, 67, cet organe 70 étant aussi centré sur l'axe 68, et coopérant éventuellement avec des bagues (non représentées) portées par les orifices.

Les deux chapes 66 sont agencées de part et d'autre de la ferrure 29 de l'attache 15, selon la direction Y. Elles sont elles aussi situées au droit ou à proximité, dans la direction Z, du longeron avant de voilure 58, sur lequel elles sont rapportées fixement, de préférence par boulonnage.

Les deux attaches latérales 11a, 11b sont chacune conçue pour assurer uniquement la reprise des efforts s'exerçant selon la direction X, à savoir les efforts de poussée, et les efforts s'exerçant selon la direction Z.

Ainsi, la reprise du moment selon la direction X s'effectue à l'aide des deux attaches latérales 11a, 11b reprenant des efforts verticaux, la reprise du moment selon la direction Z s'effectue également à l'aide des deux attaches latérales 11a, 11b reprenant des efforts longitudinaux, tandis que la reprise du moment selon la direction Y s'effectue à l'aide d'une part de l'attache arrière 15 et d'autre par des deux attaches latérales 11a, 11b reprenant chacune des efforts verticaux.

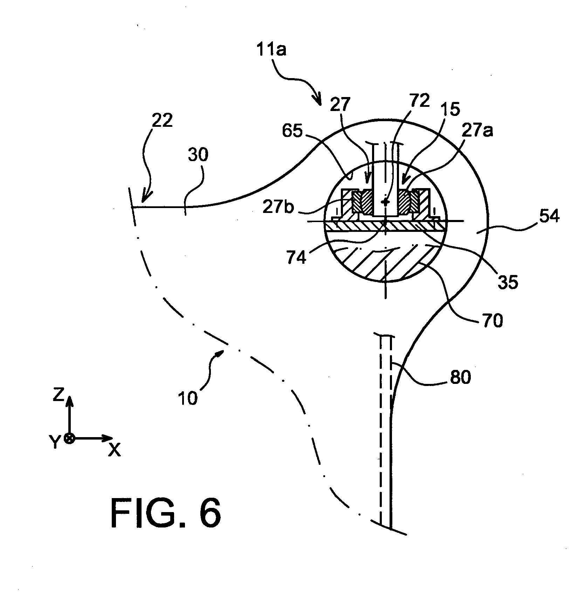

Selon une particularité de l'invention, en vue de côté correspondant à une vue selon la direction Y telle que celle montrée sur la figure 6, le centre 72 de la rotule 27 de l'attache centrale 15 se situe dans chacun des deux premiers orifices 65 des attaches avant latérales 11a, 11b (seul l'un des deux orifices 65 étant visible sur la figure 6, en raison de leur superposition en vue de côté). Cela permet globalement d'aligner les trois attaches voilure avant 11a, 11b, 15, selon la direction Y, et évite la flexion des ferrures 54 des attaches latérales 11a, 11b.

Même si cela n'a pas été représenté, il peut même être fait en sorte que les centres 74 des deux premiers orifices 65 soient alignés avec le centre de la rotule 27, dont la partie mâle 27a et la partie femelle 27b ont été représentées sur la figure 6.

Par ailleurs, toujours en vue de côté, les centres 74 des deux premiers orifices 65 se situent dans le longeron supérieur 35. Ici, ils sont plus précisément superposés à la surface extérieure du longeron supérieur 35. Il peut également en être de même pour le centre 72 de la rotule 27. De ce fait, aucun moment parasite conséquent n'est introduit dans le caisson 22.

Enfin, toujours dans le but d'assurer une bonne transmission d'efforts dans la structure rigide 10, il est de préférence prévu que les centres 72, 72, 74 soient alignés, selon la direction Z et en vue de côté, avec la nervure de transversale arrière précitée du caisson 22, référencée 80 et montrée schématiquement sur la figure 6.

A titre d'exemple indicatif, la totalité des éléments constitutifs de la structure rigide 10 qui vient d'être décrite est réalisée à l'aide de matériaux métalliques, tels que l'acier, l'aluminium, le titane, ou encore à l'aide de matériaux composites, de préférence en carbone.

Bien entendu, diverses modifications peuvent être apportées par l'homme du métier au mât d'accrochage 4 de turboréacteur 2 pour aéronef qui vient d'être décrit, uniquement à titre d'exemples non limitatifs. A cet égard, on peut notamment indiquer qui si le mât 4 a été présenté dans une configuration adaptée pour qu'il soit suspendu sous la voilure 3 de l'aéronef, ce mât 4 pourrait également se présenter dans une configuration différente lui permettant d'être monté au-dessus de cette même voilure.

## Revendications

1. Mât d'accrochage (4) de turboréacteur pour aéronef, ledit mât disposant d'une structure rigide (10) et de moyens d'accrochage du mât sur une voilure de l'aéronef, lesdits moyens d'accrochage du mât sur la voilure comprenant deux attaches avant latérales (11a, 11b) chacune conçue de manière à reprendre des efforts de poussée s'exerçant selon une direction longitudinale (X) du mât, chaque attache avant latérale comprenant une ferrure (54) percée d'un premier orifice (65) et destinée à être solidaire de l'un des éléments pris parmi la structure rigide (10) et la voilure, ainsi qu'une chape (66) destinée à être solidaire de l'autre des ces éléments, et une organe d'articulation (68) reliant ladite ferrure (54) et la chape (66) en traversant ledit premier orifice (65), lesdits moyens d'accrochage comportant en outre une attache avant centrale (15) conçue de manière à reprendre des efforts s'exerçant selon une direction transversale (Y) du mât,
**caractérisé en ce que** ladite attache avant centrale (15) comprend une rotule (27), et se trouve agencée entre les deux attaches avant latérales (11a, 11b) de sorte que le centre (72) de la rotule se situe, en vue selon la direction transversale (Y), dans chacun des deux premiers orifices (65) des attaches avant latérales.

2. Mât d'accrochage selon la revendication 1, **caractérisé en ce que** le centre (72) de la rotule (27) est aligné avec le centre (74) des deux premiers orifices (65) des attaches avant latérales.

3. Mât d'accrochage selon la revendication 1 ou la revendication 2, **caractérisé en ce que** ladite structure rigide (10) comporte un caisson (22) comprenant un longeron supérieur (35), un longeron inférieur (36) ainsi que deux panneaux latéraux (30), et **en ce qu'**en vue selon la direction transversale (Y), les centres (74) des deux premiers orifices (65) des attaches avant latérales (11a, 11b) se situent dans ledit longeron supérieur (35) ou longeron inférieur (36).

4. Mât d'accrochage selon l'une quelconque des revendications précédentes, **caractérisé en ce que** lesdits moyens d'accrochage comprennent également une attache arrière (13) comportant une rotule (59).

5. Mât d'accrochage (4) pour aéronef selon l'une quelconque des revendications précédentes, **caractérisé en ce que** lesdits moyens d'accrochage du mât sur la voilure de l'aéronef sont constitués par ladite attache arrière (13) conçue de manière à reprendre uniquement des efforts s'exerçant selon la direction verticale (Z) du mât, lesdites deux attaches avant latérales (11a, 11b) chacune conçue de manière à reprendre uniquement des efforts s'exerçant selon la direction longitudinale (X) du mât et selon la direction verticale (Z) de celui-ci, et ladite attache avant centrale (15) conçue de manière à reprendre uniquement des efforts s'exerçant selon la direction transversale (Y) du mât.

6. Ensemble moteur (1) pour aéronef **caractérisé en ce qu'**il comprend un mât d'accrochage (4) selon l'une quelconque des revendications précédentes, ainsi qu'un turboréacteur (2) porté par ledit mât, et une voilure (3) portant ce dernier.

7. Aéronef **caractérisé en ce qu'**il comprend au moins un ensemble moteur (1) selon la revendication 6.

## Patentansprüche

1. Aufhängemastsystem (4) für ein Turbostrahltriebwerk für ein Luftfahrzeug, wobei das Mastsystem eine starre Struktur (10) und Aufhängemittel für den Mast an einem Tragflügel des Luftfahrzeugs aufweist, wobei die Aufhängemittel für den Mast an dem Tragflügel zwei seitliche vordere Befestigungen (11a, 11b) umfassen, die jeweils derart gestaltet sind, dass sie in einer Längsrichtung (X) des Mastsystems auftretende Schubkräfte aufnehmen, wobei jede seitliche vordere Befestigung einen Beschlag (54), der durch eine erste Öffnung (65) durchbrochen ist und so gestaltet ist, dass er mit einem der Elemente, das aus der starren Struktur (10) und dem Tragflügel ausgewählt ist, einstückig ist, sowie einen Gabelkopf (66), der so gestaltet ist, dass er einstückig mit dem anderen dieser Elemente ist, und ein Gelenkorgan (68), das den Beschlag (54) und den Gabelkopf (66) unter Hindurchgehen durch die erste Öffnung (65) verbindet, umfasst, wobei die Aufhängemittel ferner eine zentrale vordere Befestigung (15) aufweisen, die derart gestaltet ist, dass sie in einer Querrichtung (Y) des Mastsystems auftretende Kräfte aufnimmt,
**dadurch gekennzeichnet, dass** die zentrale vordere Befestigung (15) ein Kugelgelenk (27) umfasst und derart zwischen den beiden seitlichen vorderen Befestigungen (11a, 11b) angebracht ist, dass sich das Zentrum (72) des Kugelgelenks, in Querrichtung (Y) betrachtet, in jeder der beiden ersten Öffnungen (65) der seitlichen vorderen Befestigungen befindet.

2. Aufhängemastsystem nach Anspruch 1, **dadurch gekennzeichnet, dass** das Zentrum (72) des Kugelgelenks (27) mit dem Zentrum (74) der beiden ersten Öffnungen (65) der seitlichen vorderen Befestigungen fluchtend ausgerichtet ist.

3. Aufhängemastsystem nach Anspruch 1 oder Anspruch 2, **dadurch gekennzeichnet, dass** die starre Struktur (10) einen Kasten (22) aufweist, der einen oberen Träger (35), einen unteren Träger (36) sowie zwei Seitenplatten (30) umfasst und dass, in Querrichtung (Y) betrachtet, sich die Zentren (74) der beiden ersten Öffnungen (65) der seitlichen vorderen Befestigungen (11a, 11b) in dem oberen Träger (35) oder dem unteren Träger (36) befinden.

4. Aufhängemastsystem nach einem der vorhergehenden Ansprüche, **dadurch gekennzeichnet, dass** die Aufhängemittel ferner eine hintere Befestigung (13) umfassen, die ein Kugelgelenk (59) aufweist.

5. Aufhängemastsystem (4) für ein Luftfahrzeug nach einem der vorhergehenden Ansprüche, **dadurch gekennzeichnet, dass** die Aufhängemittel des Masts an der Tragfläche des Luftfahrzeugs aus der hinteren Befestigung (13), die derart gestaltet ist, dass sie nur in der Vertikalenrichtung (Z) des Mastsystems auftretende Kräfte aufnimmt, den zwei seitlichen vorderen Befestigungen (11a, 11b), die jeweils derart gestaltet sind, dass sie nur in der Längsrichtung (X) des Mastsystem und in der Vertikalenrichtung (Z) desselben auftretende Kräfte aufnehmen, und der zentralen vorderen Befestigung (15), die derart gestaltet ist, dass sie nur in der Querrichtung (Y) des Mastsystems auftretende Kräfte aufnimmt, bestehen.

6. Triebwerksystem (1) für ein Luftfahrzeug, **dadurch gekennzeichnet, dass** es ein Aufhängemastsystem (4) nach einem der vorhergehenden Ansprüche sowie ein durch das Mastsystem getragenes Turbostrahltriebwerk (2) und einen das Letztere tragenden Tragflügel (3) umfasst.

7. Luftfahrzeug, das **dadurch gekennzeichnet ist, dass** es mindestens ein Triebwerksystem (1) nach Anspruch 6 umfasst.

## Claims

1. A pylon (4) for attaching a turbine engine for an aircraft, said pylon having a rigid structure (10) and means for attaching the pylon on a wing of the aircraft, said means for attaching the pylon on the wing comprising two side front ties (11a, 11b) each designed so as to take thrust forces exerted along a longitudinal direction (X) of the pylon, each side front tie comprising a fitting (54) pierced with a first orifice (65) and intended to be firmly attached to one of the elements taken from the rigid structure (10) and the wing, as well as a yoke (66) intended to be firmly attached to the other one of these elements, and a joint member (68) connecting said fitting (54) and the yoke (66) by crossing said first orifice (65), said attachment means further including a central front tie (15) designed so as to take the forces exerted along a transverse direction (Y) of the pylon,
**characterized in that** said central front tie (15) comprises a ball joint (27), and is laid out between both of the side front ties (11a, 11b) so that the centre (72) of the ball joint is located, as seen along the transverse direction (Y), in each of the first two orifices (65) of the side front ties.

2. The attachment pylon according to claim 1 **characterized in that** the centre of the ball joint (27) is aligned with the centre (74) of the first two orifices (65) of the side front ties.

3. The attachment pylon according to claim 1 or claim 2, **characterized in that** said rigid structure (10) includes a box (22) comprising an upper spar (35) a lower spar (36) as well as two side panels (30), and **in that**, as seen along the transverse direction (Y), the centers (74) of the first two orifices (65) of the side front ties (11a, 11b) are located in said upper spar (35) or lower spar (36).

4. The attachment pylon according to claim 1, **characterized in that** said attachment means also comprise a rear tie (13) including a ball joint (59).

5. The attachment pylon (4) for an aircraft according to claim 1, **characterized in that** said means for attaching the pylon on the wing of the aircraft are formed by said rear tie (13) designed so as to only take the forces exerted along the vertical direction (Z) of the pylon, said two front ties (11a, 11b) each designed so as to only take the forces exerted along the longitudinal direction (X) of the pylon and along the vertical direction (Z) of the latter, and said central front tie (15) designed so as to only take the forces exerted in the transverse direction (Y) of the pylon.

6. An engine assembly (1) for an aircraft **characterized in that** it comprises an attachment pylon (4) according to claim 1, as well as a turbine engine (2) borne by said pylon, and a wing (3) bearing the latter.

7. An aircraft **characterized in that** it comprises at least one engine assembly (1) according to claim 6.
